# EUROPÄISCHE PATENTSCHRIFT

(11) **EP 1 378 807 B1**
(45) Veröffentlichungstag und Bekanntmachung des Hinweises auf die Patenterteilung: **28.02.2007**
(21) Anmeldenummer: 03014933.0
(22) Anmeldetag: 01.07.2003
(51) Int. Cl.: G05D 23/26, G01K 7/38, H05B 3/74

(54) **Verfahren zum Messen der Temperatur eines metallischen Kochgefässes**
Method for measuring the temperature of a metallic cooking vessel
Procédé pour mesurer la température d'un récipient de cuisson métallique

(30) Priorität: 05.07.2002 DE 10231122
(43) Veröffentlichungstag der Anmeldung: 07.01.2004
(73) Patentinhaber: E.G.O. ELEKTRO-GERÄTEBAU GmbH, D-75038 Oberderdingen (DE)
(72) Erfinder: Schilling Wilfried, D-76703 Kraichtal (DE); Bellm Mathias, D-76646 Bruchsal (DE)
(74) Vertreter: Patentanwälte Ruff, Wilhelm, Beier, Dauster & Partner

(56) Entgegenhaltungen:
- EP-A- 0 658 067
- DE-A- 4 413 979
- DE-A- 19 540 408
- US-A1- 2002 011 480

## Beschreibung

### Anwendungsgebiet und Stand der Technik

Die Erfindung betrifft ein Verfahren zum Messen der Temperatur eines metallischen Kochgefäßes im Bereich einer Heizung gemäß dem Oberbegriff des Anspruchs 1 sowie eine elektrische Heizeinrichtung mit Temperaturmessung gemäß dem Oberbegriff des Anspruchs 15.

Verfahren und mit dafür geeigneten Einrichtungen versehene Heizungen zum Messen der Temperatur eines Kochtopfes aus Metall beispielsweise sind in vielfältiger Form bekannt. Um berührungslos die Temperatur eines Kochtopfes zu messen und daraus eine Temperaturregelung abzuleiten, ist beispielsweise versucht worden, einen Schwingkreis aus einer Induktionsspule zusammen mit dem metallischen Kochtopfboden zu bilden. Dadurch kann beispielsweise die Schwingkreisfrequenz des Kochtopfbodens ermittelt werden. Diese wiederum wird von der temperaturabhängigen Permeabilität des Materials des Kochtopfbodens bestimmt. Somit kann aus dem Verhalten des Kochtopfbodens auf seine Temperatur geschlossen werden. Hierbei ist es jedoch erforderlich, das System aufwendig zu kalibrieren um jeweils einigermaßen genaue Temperaturangaben machen zu können. Dieses wird als nachteilig angesehen.

Die DE 195 40 408 A1 beschreibt ein Kochsystem, bei dem für eine Temperaturregelung eines auf einem Kochfeld stehenden Kochgeschirrs dessen Temperatur elektromagnetisch drahtlos von unten abgefragt wird. Dabei bilden eine Sende-Einrichtung und das Kochgeschirr einen Schwingkreis, wobei durch die Temperaturabhängigkeit des Schwingkreisverhaltens des Kochgeschirrbodens dessen Temperatur ermittelt werden kann. In dem Kochgeschirrboden kann auch ein spezielles Sensorelement als Temperaturfühler eingesetzt sein, dessen Temperatur ebenfalls über einen Schwingkreis abgefragt werden kann.

Die EP 658 067 A1 beschreibt eine Steuerung mit einer sensorisch betriebenen Temperaturmessung einer Kochstelle einer Glaskeramik-Kochfläche. Dabei kann die Temperatur entweder direkt gemessen werden mit Temperaturfühlern oder Thermoelementen. Eine indirekte Temperaturmessung erfolgt über auf die Glaskeramik aufgebrachte Leiterbahnen und Messung des spezifischen Widerstandes der Glaskeramik damit. Aufgrund dessen Temperaturabhängigkeit kann wiederum die Temperatur bestimmt werden.

Die DE 44 13 979 A1 beschreibt ein weiteres Verfahren zur Erfassung der Temperatur eines Kochgeschirrs. Dazu ist in dessen Boden ein temperaturmäßig auswertbares Sensorelement angeordnet. Die kapazitiven oder ferromagnetischen Eigenschaften dieses Sensorelementes sind temperaturabhängig und können durch ein weiteres Sensorelement am Kochfeld ausgewertet werden zur Bestimmung der Temperatur.

Die US 2002/0011480 A1 beschreibt verschiedene Anordnungen von Temperatursensoren an einer einwindigen Leiterschleife, die von einem Strahlungsheizkörper unter einem Glaskeramik-Kochfeld getragen wird. Hierdurch kann lediglich eine Temperatur unterhalb der Glaskeramik-Kochfläche erfasst werden und nicht im Kochgeschirrboden.

### Aufgabe und Lösung

Der Erfindung liegt die Aufgabe zugrunde, ein vorgenanntes Verfahren sowie eine Heizeinrichtung zu schaffen, mit denen die Nachteile des Standes der Technik vermieden werden können, insbesondere auf eine aufwendige und fehleranfällige Justierung von induktiven Temperatur-Erkennungssystemen verzichtet werden kann.

Gelöst wird diese Aufgabe durch ein Verfahren mit den Merkmalen des Anspruchs 1 sowie eine Heizeinrichtung mit den Merkmalen des Anspruchs 15. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß ist bei dem Verfahren vorgesehen, dass ein induktiver Sensor und eine Auswerteelektronik zur Erfassung und Regelung der Temperatur des Kochgefäßes vorgesehen sind. Dabei sind der induktive Sensor, der Träger und das metallische Kochgefäß Teil eines Schwingkreises, wodurch ein Schwingkreisparameter gemessen wird. Als Schwingkreisparameter können beispielsweise die Frequenz oder ein Phasenwinkel bzw. eine Dämpfung oder ein Leitwert ermittelt werden. Der zeitliche Verlauf des Schwingkreisparameters wird dabei erfasst. Hierbei hat sich als Besonderheit der Erfindung gezeigt, dass bei bestimmten Abschnitten eines üblichen Kochvorgangs, insbesondere dem beginnenden Sieden von Wasser oder Flüssigkeit in dem Kochgefäß, die Temperatur des Kochgefäßes bzw. des Kochgefäßbodens keine wesentliche Änderung mehr erfährt. Siedendes Wasser kann in einem normalen Kochgefäß keine Temperatur höher als 100°C annehmen. Dieser Punkt, an dem sich die Temperatur des Kochgefäßes und somit auch der gemessene Schwingkreisparameter wie beispielsweise die Frequenz nicht mehr wesentlich ändert, wird als charakteristischer Abschnitt erfasst. Insbesondere ändert sich hier die Steigung des Verlaufs stark. Aus diesem charakteristischen Abschnitt wiederum wird die Temperatur ermittelt, beispielsweise bei einem beginnenden Siedevorgang von Wasser als Temperatur von ungefähr 100°C.

Des weiteren kann erfindungsgemäß zusätzlich zu einer solchen erfindungsgemäßen Feststellung einer relativen Änderung des Verlaufs bzw. des Messwertes der Absolutwert des Messwerts an einem bestimmten Punkt des charakteristischen Abschnitts als Sollwert für die Regelung verwendet werden. Somit kann sehr leicht und ohne aufwendige Abstimmung ein Sollwert für eine Temperaturregelung gewonnen werden.

Die Heizung weist dabei, wie oftmals üblich, einen metallischen oder sogar ferromagnetischen Träger auf. Dieser erwärmt sich ebenso im Heizbetrieb, wodurch such auch seine Permeabilität und somit sein Schwingkreisverhalten ändern. Da er ein Teil des induktiven Schwingkreises ist, bildet der Träger zusätzlich einen sich verändernden, störenden Einfluss für den Schwingkreis und somit die Schwingkreisparameter- bzw. Temperaturerfassung. Erfindungsgemäß wird die Temperatur des Trägers gemessen und zu einem Korrekturwert verarbeitet. Mit diesem Korrekturwert wird dann der gemessene Schwingkreisparameter korrigiert derart, dass der störende Einfluss des Trägers entfällt.

Auf diese Art und Weise ist es möglich, auch weitere Einflüsse des Aufheizvorganges, beispielsweise Erwärmung weiterer Einrichtungen oder Bauteile, zu reduzieren. So können durch ähnliche Erfassung und Erzeugung sowie Verwendung von Korrekturwerten Störungen und größere Meßungenauigkeiten vermieden werden.

Vorteilhaft wird als Änderung der Steigung des Messwertverlaufs eine Abnahme der Steigung herangezogen. Dies kann der Übergang zu einem im wesentlichen konstanten Messwert sein, welcher einer in etwa konstanten Temperatur des Kochgefäßes entspricht.

Des weiteren hat sich erfindungsgemäß gezeigt, dass bei vollständigem Verdampfen von Wasser oder einer anderen Flüssigkeit in dem Kochgefäß ein erneuter Temperaturanstieg festgestellt werden kann. Dieser bedeutet eine erneute Änderung der Frequenz und damit des Messwerts. Dieser kann als ein weiterer bzw. zweiter charakteristischer Abschnitt des Verlaufs erkannt werden. Des weiteren kann dies, da es in der Regel ein Zustand ist, der sich auf die Temperaturregelung bzw. die Heizung auswirken sollte, als Signal zum Abschalten der Heizung verwendet werden.

Die Korrekturwerte können gespeichert werden. Dies kann in Verbindung mit der Temperatur des Trägers, der Zeit oder der Energieeinkopplung erfolgen. Das Speichern der Korrekturwerte kann in Form von Kurven bzw. den entsprechenden Werten erfolgen. Die Korrekturwerte können sozusagen auch als Kurvenscharen mit bestimmten Parametern gespeichert werden. Dies kann beispielsweise in Abhängigkeit von einer bestimmten Energieeinkopplung über eine gewisse Zeit hinweg erfolgen.

Die Temperaturmessung kann durch einen Widerstandsmessfühler erfolgen. Dies kann auch von bestimmten Anwendungsfällen abhängen. Eine Temperaturmessung und Ermittlung des Korrekturwertes erfolgt bevorzugt wiederholt, insbesondere laufend.

Zur Verarbeitung der Temperatur oder der Temperaturänderung des Trägers zu einem Korrekturwert kann eine Steuerung vorgesehen sein. Diese weist vorteilhaft einen Mikroprozessor auf. Es kann auch ein Speicher für die Korrekturwerte vorgesehen sein. Aus der Temperatur des Trägers wird dann anhand der bekannten Korrekturwerte eine Schwingkreisparameter- oder Frequenzverschiebung berechnet, beispielsweise durch einfache Entnahme eines Frequenzwertes, der einer gemessenen Temperatur entspricht. Die Frequenzverschiebung wird dann auf die gemessene Frequenz des Schwingkreises angewandt.

Als induktiver Sensor wird vorteilhaft eine Spule verwendet. Diese kann bei einem Ausführungsbeispiel der Erfindung eine Topferkennungsspule sein. Vorteilhaft weist die Spule wenige Windungen auf. Besonders vorteilhaft weist die Spule nur eine einzige Windung auf, wodurch sich der Aufwand für Herstellung und Halterung einer solchen Spule reduzieren lässt. Alternativ zu einer Spule mit wenigstens einer Windung kann ein gerader induktiver Sensor, ein sogenannter Lihearsensor, eingesetzt werden.

Bei einer weiteren Ausgestaltung der Erfindung ist es möglich, dass vorgenannte Verfahren bei einer sogenannten Induktionsheizung mit einer Induktionsspule anzuwenden. Hier wird vorteilhaft die Induktionsspule als Sensor zur Temperaturmessung verwendet. Bevorzugt erfolgt dies in einer Art getaktetem oder abwechselndem Betrieb mit der Heizfunktion der Induktionsspule. Es wird also jeweils zeitlich abschnittsweise mittels der Induktionsspule einerseits das Kochgefäß erwärmt und andererseits der Schwingkreisparameter erfasst bzw. die Temperatur gemessen.

Vorteilhaft kann dabei die Induktionsspule eine elektrische Kontaktierung in ihrem Verlauf an einer Windung oder dergleichen aufweisen. Die Kontaktierung sollte geometrisch in einem Bereich der Induktionsspule liegen, in dem die Temperaturmessung des Kochgefäßes stattfinden sollte bzw. dieses angeordnet ist. Mittels der elektrischen Kontaktierung kann eine Unterteilung der Induktionsspule in mindestens zwei Bereiche erfolgen. Ein Teil oder Bereich der Induktionsspule wird dabei zur Temperaturmessung verwendet. Somit braucht nicht die gesamte Induktionsspule als induktiver Sensor angesteuert und betrieben zu werden, was vorteilhaft ist.

In vielen Fällen sind Induktionsspulen vorteilhaft spiralförmig ausgebildet. Hier ist es im Rahmen der Erfindung möglich, einen inneren Teil der Induktionsspule durch eine vorgenannte elektrische Kontaktierung abzuteilen. Dieser innere Teil wird dann als induktiver Sensor betrieben.

Dabei ist es weiters möglich, den anderen Teil der Spule, der nicht als Sensor verwendet wird, kurzzuschließen. Somit macht er sich bei dem Betrieb des Sensors nicht störend bemerkbar. Zusätzlich kann, um den Strom, welcher durch den Sensor fließt, gering zu halten, dieser mit einer erhöhten Frequenz betrieben werden.

Eine erfindungsgemäße elektrische Heizeinrichtung mit einer Temperaturmessung weist eine Heizung, einen induktiven Sensor und eine Auswerteelektronik zur Regelung der Temperatur auf. Besonders bevorzugt handelt es sich hierbei um eine Kochstelle eines Kochfeldes, mit welcher ein darauf gestelltes Kochgefäß erwärmt werden kann. Der induktive Sensor und ein mit der Heizeinrichtung aufzuheizendes metallisches Kochgefäß sind dabei Teil eines Schwingkreises. So kann mittels des Sensors dessen Schwingkreisparameter bzw. beispielhaft die Frequenz des Kochgefäßes erfasst werden. Dabei ist die Auswerteelektronik zur Erfassung des Schwingkreisparameters als Messwert über seinen zeitlichen Verlauf ausgebildet sowie dazu, aus einem charakteristischen Abschnitt des Kurvenverlaufs, wie er vorstehend beschrieben worden ist, die Temperatur des Kochgefäßes zu ermitteln. Des weiteren ist die Auswerteelektronik dazu ausgebildet, an einem bestimmten Punkt des charakteristischen Abschnitts des Kurvenverlaufs des Messwerts einen Absolutwert zu nehmen und diesen als Sollwert für die Regelung zu nehmen. Ein vorbeschriebener Temperaturfühler ist vorhanden, mit dem die Temperatur des Trägers, in dem sich die Heizung befindet, gemessen wird. Daraus wird dann der Korrekturwert erzeugt.

Bei einer Ausführungsmöglichkeit der Erfindung ist es möglich, eine Induktionsheizung mit einer Induktionsspule zu verwenden, wobei die Induktionsspule den Sensor bildet. Hier ist es vorteilhaft möglich, an der Induktionsspule eine elektrische Kontaktierung vorzusehen, durch welche die Induktionsspule in mindestens einen ersten Teil und einen zweiten Teil geteilt wird. Ein Teiler der Induktionsspule kann dabei zur Temperaturmessung ausgebildet sein. Des weiteren ist es vorteilhaft möglich, dass die Induktionsspule spiralförmig ausgebildet ist. Dabei kann ein innerer Teil der Spule mit einer elektrischen Kontaktierung abgetrennt und zur Temperaturmessung ausgebildet sein. Hierzu ist er mit der Auswerteelektronik verbindbar bzw. verbunden zur Ansteuerung. Ein anderer Teil der Induktionsspule, also die restliche Induktionsspule kann dabei kurzgeschlossen sein.

### Kurzbeschreibung der Zeichnungen

Ausführungsbeispiele der Erfindung sind in den Zeichnungen dargestellt und werden im folgenden beschrieben. In den Zeichnungen zeigen:
- Fig. 1: eine schematische Darstellung einer Strahlungsheizung eines Glaskeramikkochfeldes mit induktivem Sensor und Steuerung und
- Fig. 2: verschiedene Frequenz- und Temperaturkurven im zeitlichen Verlauf.

### Detaillierte Beschreibung des Ausführungsbeispiels

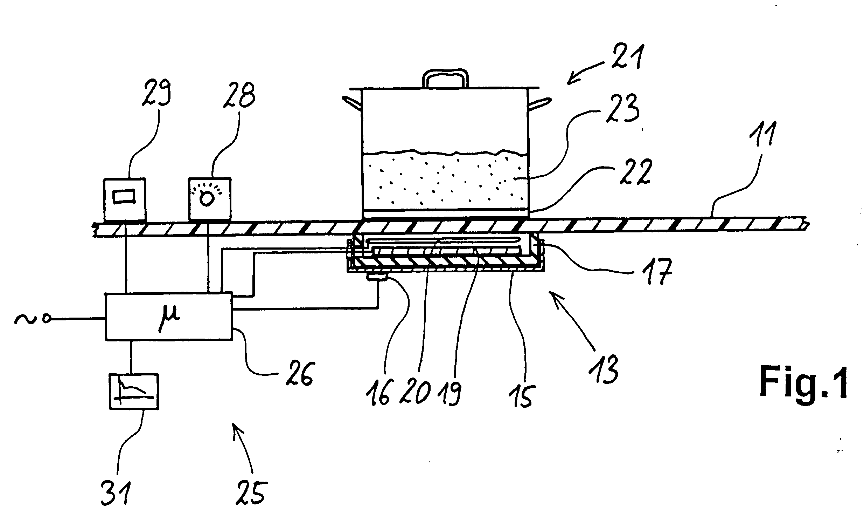

In der stark schematisierten Darstellung in Fig. 1 ist ein Glaskeramik-kochfeld 11 dargestellt. Unterhalb einer Kochstelle des Glaskeramikkochfeldes 11 befindet sich eine Strahlungsheizung 13. Diese ist im Prinzip auf bekannte Art und Weise ausgebildet. In einer Metallschale 15, auch Blechteller genannt, ist ein flacher, ebenfalls teller- oder schalenförmiger Isolierkörper 17 eingelegt. Auf dem Isolierkörper 17 befindet sich eine Heizspirale 19. Ebenso ist es möglich, dass die Heizspirale 19 in dem Isolierkörper 17 eingebettet ist. Die Strahlungsheizung 13 ist von unten an die Unterseite des Glaskeramikkochfeldes 11 angedrückt. Dies kann beispielsweise durch nicht dargestellte Haltemittel erfolgen.

Direkt über der Heizspirale 19 ist eine Induktionsspule 20 angeordnet. Diese kann, wie beschrieben worden ist, unterschiedlich ausgeführt sein, beispielsweise einwindig.

Oberhalb der Strahlungsheizung 13 ist ein Kochtopf 21 auf das Glaskeramikkochfeld 11 aufgesetzt. Mittels der Strahlungsheizung 13 wird Energie in einen Kochtopfboden 22 eingekoppelt, der dazu ferromagnetisch ausgebildet ist. Durch die in dem Topfboden 22 entstehenden Wärme wird Wasser 23 zum Kochen gebracht. Mit dieser Vorrichtung bzw. einem nachfolgend ebenfalls beschriebenen Verfahren soll erkannt werden, wann das Wasser 23 im Inneren des Kochtopfes 21 zu sieden beginnt.

Die Strahlungsheizung 13 bzw. die Heizspirale 19 ist mit einer Steuerung 25 verbunden. Die Steuerung 25 weist einen Mikroprozessor 26 auf. Des weiteren ist ein Bedienungselement 28 sowie eine Anzeige 29 vorgesehen, welche ebenfalls mit dem Mikroprozessor 26 verbunden sind. Bedienungselement 28 sowie Anzeige 29 können auf übliche Art und Weise ausgebildet sein.

Des weiteren weist die Steuerung 25 einen Speicher 31 auf, der mit dem Mikroprozessor 26 verbunden ist. Die Steuerung 25 bzw. der Mikroprozessor sind in der beispielhaften Darstellung auch für die Energiezufuhr zur Heizspirale 25 zuständig. Dazu können beispielsweise Leistungsschalter oder dergleichen enthalten sein.

Die Temperatur der Metallschale 15 wird direkt gemessen. Dazu ist ein Temperatursensor 16 an der Unterseite der Metallschale 15 angebracht. Der Ort für die Anbringung des Temperatursensors kann variieren, sollte jedoch so gewählt werden, dass er an einer möglichst repräsentativen Stelle angebracht ist. Der Temperatursensor 16 kann beispielsweise ein Widerstandsmessfühler sein. Er ist mit der Steuerung 25 bzw. dem Mikroprozessor 26 verbunden, um die Temperatur der Metallschale bei der Auswertung der Kurven zur Verfügung zu haben.

Gemäß dem vorstehend beschriebenen erfindungsgemäßen Verfahren zum Messen der Temperatur des Kochtopfes 21 wird die Induktionsspule 20 von der Steuerung 25 neben dem induktiven Heizbetrieb als induktiver Sensor angesteuert. Selbstverständlich ist es hier möglich, eine Induktionsspule einer Induktionsheizung zu verwenden. Diese könnte dann wechselweise als Heizung und als induktiver Sensor angesteuert werden. Ein solches wechselweises Ansteuern der Induktionsspule sowohl als induktive Heizung als auch als induktiver Sensor ist für den Fachmann an sich bekannt.

Die Induktionsspule 20 bildet einen Teil eines induktiven Schwingkreises, in dem der Kochtopfboden 22 sowie die Metallschale 15 eingebunden sind. Die Metallschale 15 sowie der Kochtopfboden 22 weisen eine temperaturabhängige Permeabilität und somit Induktivität auf, welche den induktiven Schwingkreis beeinflusst und über die Induktionsspule 20 erfasst werden kann. Das erfindungsgemäße Verfahren basiert u.a. darauf, dass aufgrund der Veränderung der Induktivität u.a. des Kochtopfbodens 22 in Abhängigkeit von der Temperatur auf die Temperatur geschlossen werden kann.

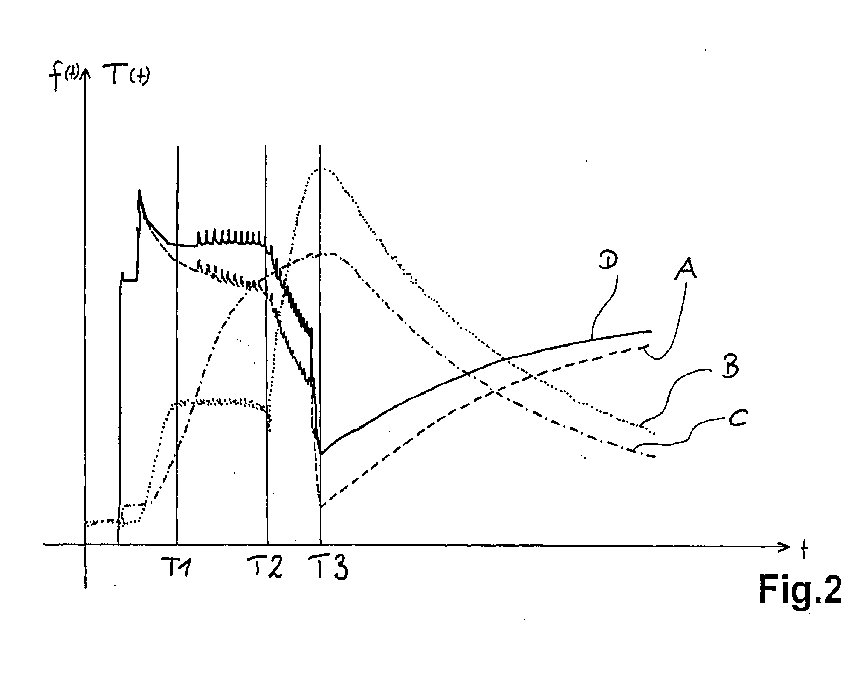

In Fig. 2 sind verschiedene Kurven für die Frequenz f und die Temperatur T jeweils über der Zeit t aufgetragen. Die Zeiten spielen an sich keine Rolle. Zur Veranschaulichung kann gesagt werden, dass die Kurven in etwa bis zu einer Zeit von 60 Minuten reichen. Dies ist jedoch lediglich beispielhaft und dient der Anschaulichkeit. Die Frequenzen sind ebenfalls variabel. Die hier dargestellten Frequenzen liegen im Bereich von etwas über 3,3Mhz. Auch diese Angabe dient lediglich der Anschaulichkeit und kann stark variieren. Die Temperaturverläufe haben eine Art Sattelpunkt bei 100°C, dazu später mehr.

Dargestellt ist zum einen eine gestrichelte Kurve A. Diese ist eine nicht kompensierte Kurve der Frequenz des gesamten Schwingkreises über der Zeit, welcher aus Induktionsspule 20, Kochtopfboden 22 und Metallschale 15 besteht. Dazu kommt auch noch die Heizspirale 19.

Die gepunktete Kurve B stellt den Verlauf der Temperatur T über der Zeit t nur für den Topf 21 dar. Dabei ist hier ein Einfluss der Metallschale 15 nicht berücksichtigt. Diese Kurve ist so, wie wenn sie mit einem separaten Temperaturmessgerät ermittelt worden wäre.

In ähnlicher Art und Weise stellt die strichpunktierte Kurve C den Verlauf der Temperatur T über der Zeit t für die Metallschale isoliert dar. Der flache und zeitlich stark verzögerte Temperaturanstieg der Metallschale 15 rührt daher, dass die Wärme durch den Isolierkörper 17 nur relativ langsam in die Metallschale 15 wandert.

Die Kurve D stellt eine kompensierte Version der Kurve A dar nach der Bereinigung von dem Einfluss, den die Metallschale 15 ausübt. Anhand der Frequenz-Kurve D kann eine Erfassung der Temperatur des Kochgefäßes 21 stattfinden.

Des weiteren ist eingezeichnet ein Zeitpunkt T1. Dieser markiert im zeitlichen Verlauf den Beginn des Siedens des Wassers 23. Dieser Beginn des Siedens bedeutet nämlich, dass sich die Temperatur des Kochtopfes 21 bzw. des Topfbodens 22 nicht mehr ändert, sondern in etwa konstant 100°C beträgt.

Der nächste Zeitpunkt T2 gibt im zeitlichen Verlauf den Punkt an, wo, entweder durch normale Erwärmung oder durch Kochen, das Wasser 23 im Kochtopf 21 komplett verdampft ist. Ab diesem Zeitpunkt kann wieder eine Erhöhung der Temperatur und somit eine weitere Veränderung der Frequenz f stattfinden. Zum Zeitpunkt T3 wurde die Heizung 13 abgeschaltet. Die Temperaturen fallen dann ab.

Zur Erläuterung der Kurve A kann gesagt werden, dass diese in etwa zum Zeitpunkt T1 zwar einen gewissen Knick aufweist. Dieser ist allerdings nicht sehr ausgeprägt und reicht kaum aus, den Beginn eines Kochens des Wassers 23 zweifelsfrei festzustellen. Zum Zeitpunkt T2, zu dem das Wasser 23 verschwunden ist, steigt die Temperatur des Topfbodens 22 erneut an, also fällt die Frequenz wieder ab. Der sich kurz darauf anschließend absolute Tiefpunkt der Kurve A ist für die Steuerung bzw. das hier beschriebene Verfahren ohne Bedeutung.

Der Punkt bei T1 kann als Regelpunkt für eine Temperaturregelung auf 100°C verwendet werden.

Die kleinen Spitzen in den Kurven A und D vor und nach T2 zeigen an, wie die Strahlungsheizung 13 getaktet heizt. Die Spitzen kennzeichnen dabei den Takt. Sie entstehen vor allem auch dadurch, dass die Heizspirale 19 selber aus Metall ist und sich ihre Temperatur und somit auch ihre Permeabilität während der getakteten Heizvorgänge ändert.

Bei der Kurve B ist zu erkennen, wie sich die Temperatur des Kochtopfes 21 zwischen T1 und T2 nicht ändert. Erst durch das Leerkochen des Topfes ab T2 erhöht sich die Temperatur wieder.

In der Kurve C der Metallschale 15 dagegen findet sich der Einfluss des Leerkochens des Topfes 21 selbstverständlich nicht. Hier kann deutlich entnommen werden, dass zwischen dem Zeitpunkt T1 und T2 die Temperatur der Metallschale langsam aber kontinuierlich zunimmt, und erst ein gutes Stück nach T2 ihren Maximalwert erreicht. Dieses kontinuierliche Ansteigen der Temperatur der Metallschale 15 vor allem zwischen den Zeitpunkten T1 und T2 ist der Grund, warum ohne eine Kompensation dieses Einflusses die Kurve A die dargestellte Form hat und für eine genaue Temperaturauswertung nicht geeignet ist oder Fehler hervorruft.

Die Kurve B stellt die Kurve da, die für die Auswertung der Temperatur ideal wäre. Da aber nicht zu vermeiden ist, dass sich die Metallschale 15 in dem induktiven Schwingkreis befindet und somit einen Einfluss auf die gemessene Kurve A ausübt, muss eben der Einfluss der Metallschale 15 mit der Temperatur gemäß der Kurve C berücksichtigt werden.

Insofern kann man grundsätzlich für das erfindungsgemäße Verfahren sagen, dass die Kurve A durch den induktiven Sensor 19 erfasst wird. Die an sich bekannte Kurve C, die beispielsweise einmal in einem Referenz-Meßverfahren für eine bestimmte Metallschale 15 erfasst und dann in dem Speicher 31 abgespeichert werden kann, wird als Korrekturwert herangezogen und auf bestimmte Art und Weise mit der Kurve A verrechnet. Als Ergebnis dieser Verrechnung erhält man die Kurve D. Aus dieser Kurve D sind, wie Fig. 2 zeigt, die Änderungen der Verläufe zu den Zeitpunkten T1 und T2 relativ gut erfassbar und können von einer Steuerung entsprechend ausgewertet werden.

In der Realisierung des Verfahrens in der Steuerung 25 können die Kurven C hinterlegt sein. Durch die Erfassung der Temperatur der Metallschale 15 mittels des Temperatursensors 16 kann die Steuerung 25 jederzeit bestimmen, an welchem Punkt der Kurve C man sich gerade befindet. Schließlich sind Frequenz und Temperatur der Metallschale 15 eben über die physikalischen Gegebenheiten verbunden. Somit kann die Steuerung zu jedem Zeitpunkt aus der Kurve C die notwendigen Korrekturwerte entnehmen, um die Kurve A zu korrigieren. Als Ergebnis dieser Korrektur erhält die Steuerung 25 eben die Kurve D. Wie vorstehend beschrieben worden ist, kann daraus sowohl der Zeitpunkt T1 als auch der Zeitpunkt T2 genau bestimmt werden. Somit ist sowohl ein beginnender Kochvorgang als auch ein Leerwerden eines Kochtopfes 21 erkennbar.

Die Kurven C werden in den Speicher 31 vorteilhaft bereits werksseitig eingespeichert. So braucht dieser Vorgang nicht für jede einzelne induktive Heizung 13 separat vorgenommen zu werden. Auch Zusammenhänge mit einer Energieeinkopplung über die Heizung können abgespeichert werden, um ein Messen der Temperatur der Metallschale und den damit verbundenen Aufwand einsparen zu können.

Die Erfindung basiert auch darauf, dass der Abstand zwischen der Metallschale 15 und der Heizspirale 19 konstruktiv vorgegeben und somit immer derselbe ist. Deswegen lässt sich der aufgrund der gemessenen Temperatur der Metallschale erfasste Einfluss der Metallschale auf die gemessene Frequenz der Kurve A erfassen, bestimmen und hinterlegen. Genauso gut kann dieser Einfluss eben nachher durch die Korrektur aus der Kurve A herausgerechnet werden, wodurch man die Kurve B erhält.

Anstelle einer Messung der Temperatur der Metallschale 15 mittels eines Temperatursensors 16 ist es auch möglich, verschiedene Kurven gemäß der Kurve C zu hinterlegen. Aus der Bestimmung der über die Induktionsspule 19 eingekoppelten Kochenergie bzw. der Heizleistung, was in der Steuerung 25 bzw. dem Mikroprozessor 26 ohne weiteres möglich ist, kann ermittelt werden, welche Temperatur die Metallschale 15 nach Einkoppeln einer bestimmten Energie über eine bestimmte Zeit oder mit einem bestimmten Zeitprofil aufweist.

Da es grundsätzlich möglich ist, dass nicht nur durch Kochen, sondern auch durch normale Erwärmung das ganze Wasser 23 aus dem Kochtopf 21 verschwindet, besteht grundsätzlich auch die Möglichkeit, zwar keinen Punkt entsprechend T1 feststellen zu können. Schließlich bleibt der Kochtopf 21 nicht unbedingt bei einer bestimmten Temperatur stehen. Auf jeden Fall kann aber der Punkt T2 festgestellt werden, zu dem wieder eine rasche Erwärmung und somit eine starke Änderung der Steigung der kompensierten Kurve D festgestellt werden kann.

Ist es möglich, einem mit Inhalt aufgesetztem Kochtopf 21 eine bestimmte Anfangstemperatur, beispielsweise Raumtemperatur, zuzuordnen, so kann zusätzlich durch Erreichen des Kochpunktes T1 die Frequenz f bestimmt werden, bei der der Kochtopf 21 relativ genau 100°C aufweist. Anschließend kann für bestimmte Vorgänge, beispielsweise ein Warmhalten eines Inhalts des Kochtopfs, eine geringere Temperatur als 100°C, beispielsweise 70°C oder 80°C, angefahren werden. Durch Interpolieren der Kurve zwischen der bekannten Anfangstemperatur und den 100°C kann die zu der gewünschten Temperatur gehörige Frequenz ermittelt werden. Dann kann die Steuerung 25 die Energieeinkopplung über die Heizspirale 19 so steuern, dass in etwa diese Frequenz und somit die gewünschte Temperatur gehalten wird.

Die Anfangstemperatur für ein solches Verfahren kann beispielsweise über Bedienungselement 28 oder dergleichen eingegeben werden. Alternativ kann davon ausgegangen werden, dass beim Aufsetzen ein Kochtopf 21 samt Inhalt immer in etwa Raumtemperatur aufweist.

## Patentansprüche

1. Verfahren zum Messen der Temperatur eines ferromagnetischen Kochgefäßes (21), wobei das Kochgefäß im Bereich einer Heizung (13) angeordnet ist, wobei für die Heizung ein induktiver Sensor (20), eine Steuerung (25) mit Auswerteelektronik (26) zur Regelung der Heizung und somit der Temperatur des Kochgefä-ßes und ein Träger (15) aus ferromagnetischem Material vorgesehen sind, wobei:
- der induktive Sensor (20), der Träger (15) und das ferromagnetische Kochgefäß (21) Teil eines Schwingkreises sind,
- ein Schwingkreisparameter am induktiven Sensor (20) als Messwert im zeitlichen Verlauf (A) erfasst wird und aus einem charakteristischen Abschnitt dieses Verlaufs die Temperatur des Kochgefäßes ermittelt wird,
- der Absolutwert des Messwerts an einem bestimmten Punkt (T1) des charakteristischen Abschnitts als Sollwert für die Regelung verwendet wird,
**dadurch gekennzeichnet, dass** die Temperatur des Trägers (15) gemessen wird und daraus ein Korrekturwert erstellt wird, wobei mit dem Korrekturwert der gemessene Schwingkreisparameter (A) korrigiert wird (D).

2. Verfahren nach Anspruch 1, **dadurch gekennzeichnet, dass** als Schwingkreisparameter die Frequenz (f) verwendet wird.

3. Verfahren nach Anspruch 1, **dadurch gekennzeichnet, dass** als Schwingkreisparameter der Phasenwinkel im Schwingkreis verwendet wird.

4. Verfahren nach einem der vorhergehenden Ansprüche, **dadurch gekennzeichnet, dass** der charakteristische Abschnitt (T1) des Verlaufs eine relativ schnelle Änderung der Steigung ist, wobei insbesondere die Änderung der Steigung ein Flacherwerden der Steigung ist.

5. Verfahren nach einem der vorhergehenden Ansprüche, **dadurch gekennzeichnet, dass** als Temperatur bzw. als Sollwert ein Siedepunkt von Wasser (23) in dem Kochgefäß (21) herangezogen wird.

6. Verfahren nach einem der vorhergehenden Ansprüche, **dadurch gekennzeichnet, dass** bei Verdunsten oder Verdampfen der kompletten Flüssigkeit (23) in dem Kochgefäß (21) ein erneuter Temperaturanstieg durch einen zweiten charakteristischen Abschnitt (T2) des Verlaufs des Messwerts erkannt wird.

7. Verfahren nach einem der vorhergehenden Ansprüche, **dadurch gekennzeichnet, dass** die Korrekturwerte gespeichert werden, insbesondere in Verbindung mit der Temperatur des Trägers (15), der Zeit oder der Energieeinkopplung über die Heizung (13).

8. Verfahren nach einem der vorhergehenden Ansprüche, **dadurch gekennzeichnet, dass** die Temperaturmessung und Ermittlung des Korrekturwertes wiederholt erfolgt.

9. Verfahren nach einem der vorhergehenden Ansprüche, **dadurch gekennzeichnet, dass** die Temperaturmessung durch einen Widerstandsmessfühler (16) erfolgt.

10. Verfahren nach einem der vorhergehenden Ansprüche, **dadurch gekennzeichnet, dass** aus der Temperatur des Trägers (15) eine Verschiebung des Schwingkreisparameters berechnet wird.

11. Verfahren nach einem der vorhergehenden Ansprüche, **dadurch gekennzeichnet, dass** der induktive Sensor eine Spule (20) ist.

12. Verfahren nach einem der vorhergehenden Ansprüche, **dadurch gekennzeichnet, dass** bei einer induktiven Heizung eine Induktionsspule (20) als Sensor verwendet wird.

13. Verfahren nach Anspruch 12, **dadurch gekennzeichnet, dass** die Induktionsspule (20) mit einer elektrischen Kontaktierung in dem Bereich versehen ist, in dem die Temperaturmessung stattfindet und wobei durch die elektrische Kontaktierung eine Unterteilung der Induktionsspule (20) in mindestens zwei Bereiche erfolgt, wobei ein Teil der Induktionsspule zur Temperaturmessung verwendet wird.

14. Verfahren nach Anspruch 13, **dadurch gekennzeichnet, dass** bei einer spiralförmigen Induktionsspule (20) ein innerer Teil der Spule für die Temperaturmessung verwendet wird.

15. Elektrische Heizeinrichtung mit Temperaturmessung, als Kochstelle eines Kochfeldes (11) für ein metallisches Kochgefäß (21), mit einer Heizung (13, 19) für ein Kochgefäß, wobei die Heizung an einem ferromagnetischen Träger (15) angeordnet ist, mit einem induktiven Sensor (20) und einer Auswerteelektronik (26) zur Regelung der Temperatur des Kochgefäßes, wobei der induktive Sensor (20), der Träger (15) und das Kochgefäß (21) Teil eines Schwingkreises sind, **dadurch gekennzeichnet, dass** ein Temperatursensor (16) zur Messung der Temperatur des Trägers vorgesehen ist, wobei die Auswerteelektronik (26) ausgebildet ist:
- zur Erfassung eines Schwingkreisparameters des induktiven Sensors (20) als Messwert im zeitlichen Verlauf (A) und zur Ermittlung der Temperatur aus einem charakteristischen Abschnitt (T1) des Verlaufs,
- zur Verwendung eines Absolutwerts des Messwerts an einem bestimmten Punkt des charakteristischen Abschnitts des Verlaufs als Sollwert für eine Regelung,
- zur Verarbeitung der Temperatur des Trägers (15) zu einem Korrekturwert und
- zur Korrektur des gemessenen Schwingkreisparameters mit dem Korrekturwert.

16. Heizeinrichtung nach Anspruch 15, **gekennzeichnet durch** eine Erfassung der Frequenz (f) als Schwingkreisparameter.

17. Heizeinrichtung nach Anspruch 15 oder 16, **dadurch gekennzeichnet, dass** der induktive Sensor eine Topferkennungsspule ist zur Erkennung eines metallischen Kochgefäßes (21) im Bereich der Heizung (13).

18. Heizeinrichtung nach einem der Ansprüche 15 bis 17, **dadurch gekennzeichnet, dass** die Heizung eine Induktionsheizung mit einer Induktionsspule ist und die Induktionsspule als Sensor (20) ausgebildet ist.

19. Heizeinrichtung nach einem der Ansprüche 15 bis 18, **dadurch gekennzeichnet, dass** die Induktionsspule (20) eine elektrische Kontaktierung aufweist zur Unterteilung der Induktionsspule in mindestens einen ersten und einen zweiten Teil, wobei ein Teil der Induktionsspule zur Temperaturmessung ausgebildet ist.

20. Heizeinrichtung nach einem der Ansprüche 15 bis 19, **dadurch gekennzeichnet, dass** der Träger eine Aufnahmeschale (15) aus metallischem Material ist, wobei die Heizung (13) in der Aufnahmeschale angeordnet ist.

## Claims

1. Method for measuring the temperature of a ferromagnetic cooking vessel (21), said cooking vessel being located in the region of a heater (13), an inductive sensor (20), a control means (25) with evaluation electronics (26) for controlling the heater and thus the temperature of the cooking vessel and a support (15) made from ferromagnetic material being provided for the heater, wherein the inductive sensor (20), the support (15) and the ferromagnetic cooking vessel (21) form part of a resonant circuit, a parameter of said resonant circuit is determined on the inductive sensor (20) as a measured value in the time curve (A) and the temperature of the cooking vessel is determined from a characteristic portion of this curve, the absolute value of the measurement value is used at a specific point (T1) of the characteristic portion as a desired value for control purposes, **characterised in that** the temperature of the support (15) is measured and a correction value is produced therefrom, the measured resonant circuit parameter (A) being corrected (D) using the correction value.

2. Method according to claim 1, **characterised in that** the frequency (f) is used as the resonant circuit parameter.

3. Method according to claim 1, **characterised in that** a phase angle in the resonant circuit is used as the resonant circuit parameter.

4. Method according to any one of the preceding claims, **characterised in that** the characteristic portion (T1) of the curve is a relatively rapid change in the gradient, the change in the gradient in particular being a levelling of the gradient.

5. Method according to any one of the preceding claims, **characterised in that** a boiling point of water (23) in the cooking vessel (21) is used as the temperature or as the desired value.

6. Method according to any one of the preceding claims, **characterised in that** when all of the liquid (23) in the cooking vessel (21) has evaporated or vaporised, a further temperature increase is detected by a second characteristic portion (T2) of the measured value curve.

7. Method according to any one of the preceding claims, **characterised in that** the correction values are stored, in particular in conjunction with the temperature of the support (15), the time or the coupling in of the energy via the heater (13).

8. Method according to any one of the preceding claims, **characterised in that** the temperature is measured repeatedly and the correction value is determined repeatedly.

9. Method according to any one of the preceding claims, **characterised in that** the temperature is measured by a resistance measuring sensor (16).

10. Method according to any one of the preceding claims, **characterised in that** a shift in the resonant circuit parameter is calculated from the temperature of the support (15).

11. Method according to any one of the preceding claims, **characterised in that** the inductive sensor is a coil (20).

12. Method according to any one of the preceding claims, **characterised in that** where there is an inductive heater, an induction coil (20) is used as the sensor.

13. Method according to claim 12, **characterised in that** the induction coil (20) is provided with an electrical contacting means in the region where the temperature is measured, the induction coil (20) being subdivided into at least two regions by the electrical contacting means, one part of the induction coil being used to measure the temperature.

14. Method according to claim 13, **characterised in that** where there is spiral induction coil (20), an inner part of the coil is used to measure the temperature.

15. Electrical heating device with temperature measurement, as the hot plate of a cooking area (11) for a metallic cooking vessel (21), with a heater (13, 19) for a cooking vessel, said heater being positioned on a ferromagnetic support (15), with an inductive sensor (20) and evaluation electronics (26) for controlling the temperature of the cooking vessel, the inductive sensor (20), the support (15) and the cooking vessel (21) forming part of a resonant circuit, **characterised in that** a temperature sensor (16) is provided for measuring the temperature of the support, the evaluation electronics (26) being configured to detect a resonant circuit parameter of the inductive sensor (20) as a measured value in the time curve (A) and for determining the temperature from a characteristic portion (T1) of the curve, for using an absolute value of the measured value at a specific point of the characteristic portion of the curve as a desired value for a control, for processing the temperature of the support (15) to produce a correction value, and for correcting the measured resonant circuit parameter using the correction value.

16. Heating device according to claim 15, **characterised by** a detection of the frequency (f) as a resonant circuit parameter.

17. Heating device according to either claim 15 or claim 16, **characterised in that** the inductive sensor is a saucepan detection coil for detecting a metallic cooking vessel (21) in the region of the heater (13).

18. Heating device according to any one of claims 15 to 17, **characterised in that** the heater is an induction heater with an induction coil and the induction coil is configured as a sensor (20).

19. Heating device according to any one of claims 15 to 18, **characterised in that** the induction coil (20) has an electrical contacting means for subdividing said induction coil into at least a first part and a second part, a part of the induction coil being configured for temperature measurement.

20. Heating device according to any one of claims 15 to 19, **characterised in that** the support is a reception tray (15) of metallic material, the heater (13) being located in said reception tray.

## Revendications

1. Procédé pour mesurer la température d'un récipient de cuisson ferromagnétique (21), sachant que le récipient de cuisson est disposé dans le domaine d'un chauffage (13), sachant que pour le chauffage on prévoit un capteur inductif (20), une commande (25) avec un dispositif électronique d'interprétation (26) pour le réglage du chauffage et donc de la température du récipient de cuisson et un support (15) en un matériau ferromagnétique, et sachant que :
- le capteur inductif (20), le support (15) et le récipient de cuisson ferromagnétique (21) font partie d'un circuit oscillant,
- un paramètre de circuit oscillant auprès du capteur inductif (20) est saisi en tant que valeur de mesure en fonction du temps (A) et que la température du récipient de cuisson est déterminée par une section caractéristique de cette variation dans le temps,
- la valeur absolue de la valeur mesurée dans un certain endroit (T1) de la section caractéristique est employée comme valeur prescrite pour le réglage, **caractérisé par le fait que** la température du support (15) est mesurée et qu'à partir de celle-ci on détermine une valeur de correction, sachant que par la valeur de correction on corrige (D) le paramètre de circuit oscillant (A) mesuré.

2. Procédé d'après la revendication 1, **caractérisé en ce qu'**on emploie la fréquence (f) en tant que paramètre du circuit oscillant.

3. Procédé d'après la revendication 1, **caractérisé en ce qu'**on emploie l'angle de phase dans le circuit oscillant en tant que paramètre de circuit oscillant.

4. Procédé d'après une des revendications précédentes, **caractérisé en ce que** la section caractéristique (T1) du tracé comporte un changement du gradient relativement rapide, sachant que notamment le changement du gradient est un aplatissement de la pente.

5. Procédé d'après une des revendications précédentes, **caractérisé en ce que** l'on prend un point d'ébullition de l'eau (23) dans le récipient de cuisson (21) en tant que température ou encore valeur prescrite.

6. Procédé d'après une des revendications précédentes, **caractérisé en ce qu'**on identifie encore une élévation de température par une deuxième section caractéristique (T2) du cours de la valeur de mesure quand le liquide (23) dans le récipient de cuisson (21) est entièrement évaporé ou volatilisé.

7. Procédé d'après une des revendications précédentes, **caractérisé en ce que** les valeurs de correction sont mémorisées notamment conjointement avec la température du support (15), avec le temps ou avec l'alimentation en énergie par le chauffage (13).

8. Procédé d'après une des revendications précédentes, **caractérisé en ce que** la mesure de la température et la détermination de la valeur corrective sont répétées plusieurs fois.

9. Procédé d'après une des revendications précédentes, **caractérisé en ce que** la température est mesurée au moyen d'un capteur de mesure à résistance électrique (16).

10. Procédé d'après une des revendications précédentes, **caractérisé en ce qu'**un décalage du paramètre de circuit oscillant est calculé à partir de la température du support (15).

11. Procédé d'après une des revendications précédentes, **caractérisé en ce que** le capteur inductif est une bobine (20).

12. Procédé d'après une des revendications précédentes, **caractérisé en ce que** pour un chauffage par induction une bobine d'induction (20) est employée en tant que capteur.

13. Procédé d'après la revendication 12, **caractérisé en ce que** la bobine d'induction (20) est munie d'une connexion électrique dans le domaine où la mesure de la température est effectuée, sachant que par la connexion électrique on réalise une subdivision de la bobine d'induction (20) au moins en deux parties et sachant que une partie de la bobine d'induction est employée pour la mesure de la température.

14. Procédé d'après la revendication 13, **caractérisé en ce que** pour une bobine d'induction (20) sous forme de spirale une partie intérieure de la bobine est employée pour la mesure de la température.

15. Dispositif électrique de chauffage avec mesure de température, en tant que foyer d'une table de cuisson (11) pour un récipient de cuisson métallique (21), avec un chauffage (13, 19) pour un récipient de cuisson, sachant que le chauffage est disposé sur un support ferromagnétique (15), avec un capteur inductif (20) et un dispositif électronique d'interprétation (26) pour le réglage de la température du récipient de cuisson, sachant que le capteur inductif (20), le support (15) et le récipient de cuisson (21) font partie d'un circuit oscillant, **caractérisé en ce qu'**on prévoit un détecteur de température (16) pour mesurer la température du support, sachant que le dispositif électronique d'interprétation (26) est réalisé de manière à pouvoir :
- saisir un paramètre de circuit oscillant du capteur inductif (20) en tant que valeur mesurée en fonction du temps (A) et déterminer la température dans une section caractéristique (T1) du tracé,
- employer une valeur absolue de la valeur mesurée dans un certain endroit de la section caractéristique du tracé en tant que valeur prescrite pour le réglage,
- transformer la température du support (15) en une valeur corrective et
- corriger le paramètre de circuit oscillant mesuré par la valeur corrective.

16. Dispositif électrique de chauffage d'après la revendication 15, **caractérisé par** une saisie de la fréquence (f) en tant que paramètre de circuit oscillant.

17. Dispositif électrique de chauffage d'après la revendication 15 ou 16, **caractérisé en ce que** le capteur inductif est une bobine indicative de récipient de cuisson pour reconnaître un récipient de cuisson métallique (21) dans le domaine du chauffage (13) :

18. Dispositif électrique de chauffage d'après une des revendications de 15 à 17, **caractérisé en ce que** le chauffage est un chauffage par induction avec une bobine inductive et que la bobine inductive est réalisée en tant que capteur (20).

19. Dispositif électrique de chauffage d'après une des revendications de 15 à 18, **caractérisé en ce que** la bobine inductive (20) présente une connexion électrique pour la subdivision de la bobine inductive au moins en une première et une deuxième partie, sachant qu'une partie de la bobine inductive est réalisée de manière à pouvoir mesurer la température.

20. Dispositif électrique de chauffage d'après une des revendications de 15 à 19, **caractérisé en ce que** le support est une cuvette de logement (15) en un matériau métallique, sachant que le chauffage (13) est disposé dans la cuvette de logement.
